# EUROPEAN PATENT APPLICATION

(11) **EP 1 935 605 A1**
(43) Date of publication of application: **25.06.2008**
(21) Application number: 06026562.6
(22) Date of filing: 21.12.2006
(51) Int. Cl.: B29C 44/34, B29B 7/74, B01F 3/04, B01F 5/10, A61J 1/00

(54) **Method and apparatus for producing foam**

(71) Applicant: BTG International Limited, Limeburner Lane London EC4M 7SB (GB)
(72) Inventor: The designation of the inventor has not yet been filed
(74) Representative: Simpson, Paul Christopher

(57) **Abstract**

Apparatus (1) for generating foam from a sclerosing solution such as polidocanol and a gas which is absorbable or dissolvable in the body comprises a disposable cartridge comprising a flexible chamber (6) containing the gas and liquid, the chamber being formed as a loop. Located in the loop chamber (6) is a foam generating mesh (8). In use, the cartridge is inserted into a pumping machine (fig.5) where is engaged by a peristaltic pump (29) which circulates the contents of the loop chamber (6) through the mesh (8), thus creating foam. When a steady state is reached, foam may be withdrawn using a syringe via either a port (3) or septum.

## Description

The present invention relates to the generation of foam, for example foam comprising a sclerosing material, particularly a sclerosing solution, which is suitable for use in the treatment of various medical conditions involving blood vessels, particularly varicose veins and other disorders involving venous malformation.

Sclerosis of varicose veins is based on the injection into the veins of liquid sclerosant substances which, by *inter alia* causing a localised inflammatory reaction, favour the elimination of these abnormal veins. Until recently, sclerotherapy was a technique selected in cases of small and medium calibre varicose veins, those with diameters equal to or greater than 7 mm being treated by surgery.

An injectable microfoam suitable for therapeutic use, on larger veins in particular, has now been developed and is described in EP-A-0656203 and US5676962 (Cabrera & Cabrera), incorporated herein by reference.

It is known to generate a foam of sclerosing solution and air by drawing up appropriate volumes of air and solution in respective syringes, connecting the syringes by way of a simple connector or three way tap, and then depressing each syringe plunger in turn so as to move the contents back and forth between the two syringes.
In this way a reasonably uniform foam may be produced. However, this method suffers from a number of disadvantages.

The physical characteristics and composition of the foam are important both for efficacy and safety, and in the two syringe technique the exact composition and characteristics of the foam will depend on the accuracy with which the gas and liquid components are drawn up and the number of and speed of the plunger movements. In addition there may be difficulties ensuring the sterility of the product. The technique is also rather inconvenient, especially when it is required to make up further foam during the course of a treatment; foam degrades in a couple of minutes and it is therefore not desirable to make up a large batch and leave it in a container to be drawn up as required.

The inventors of the present application have established that the injection of a foam with air, especially in substantial quantities e.g. over 5 or 10ml, can have safety implications. In fact, even very small quantities of nitrogen (the major component of air) can have adverse safety implications. These are described in EP-A-1180015 and PCT/GB04/004848, the contents of which is incorporated herein by reference. For this reason, it is desirable that the foam is made with a gas which is substantially completely dissolvable in or absorbable by the body, e.g. in blood. It will be understood that, even if such gas is drawn up into a syringe in the two syringe method described above, there is the potential for air to be incorporated into the foam product inadvertently.

A pressurised canister device for producing sclerosing foam is currently in development and is the subject of a number of patent applications including EP-A-1180015. This product is capable of producing a foam which is highly consistent, sterile and made with a gas mixture containing a very low percentage of nitrogen gas, with the foam being delivered conveniently into a syringe immediately prior to use. The foam produced by the canister product has been used in extensive clinical trials and has been demonstrated to be effective in the treatment of varicose veins.

In parallel with the continued development of the canister product, the inventors are developing an alternative foam generating system and method which is capable of producing substantially the same foam as the canister, whilst offering some advantages over the canister. This alternative system and method are the subject of the present application.

According to the invention a device for producing foam and a gas-containing unit or cartridge/consumable for use in generating foam are provided having the features set out in the accompanying claims.

One of the advantages of this system is that it can provide a source of foam which is being conditioned continuously and thus maintained with defined properties for a period of time, so that the clinician can repeatedly withdraw foam as needed, e.g. using a syringe. The system requires a machine, which would normally be installed in the clinic, into which cartridges would be inserted. The machine would obviously have a cost in terms of initial installation and subsequent maintenance. However, the cartridges are likely to be relatively inexpensive to produce.

The gas mixture in the cartridge preferably comprises between 0.0001 and 10% nitrogen gas, preferably between 0.001 and 2% nitrogen gas, more preferably between 0.01 and 1% nitrogen gas, still more preferably between 0.1 and 0.8% or between 0.1 and 0.5% nitrogen gas. The gas mixture preferably comprises at least 10% carbon dioxide, preferably at least 25% carbon dioxide or at least 50% carbon dioxide or at least 99% carbon dioxide. The mixture preferably comprises at least 50% oxygen gas, and may comprise at least 99% oxygen gas. The gas mixture may comprise 5% or more krypton gas, e.g. 50% or more krypton gas. Gas mixtures which are appropriate for foam sclerotherapy are discussed in patent and patent application numbers EP-A-1180015, WO 04/062461, PCT/GB2006/001754, PCT/GB2006/001749 and PCT/GB2004/004848, the disclosures of which are incorporated herein by reference.

The foam produced by the device at steady state preferably has bubbles in a predetermined size range. Preferably at least 50% by number of the gas bubbles of 25µm diameter and above are of no more than 200µm diameter and at least 95% of these gas bubbles are no more than 280µm diameter.

Bubble sizes are calculated by taking up foam into a syringe through its luer opening, optionally attaching a 21G needle, and injecting foam between two glass slides that are separated using 23.25 micron diameter beads (eg. available as microspheres from Park Labs USA). Maxtascan/Global Lab Image technique was used to analyse bubble size. Diameters of uncompressed bubbles (Dr) were calculated from diameters of bubbles between slides (Df) using the equation Dr=3 √3Df²x/2 where x is the distance between the slides. These measurements thus are made at ambient temperature and pressure. It will be realised that bubbles much smaller than 25µm diameter may be present but not counted. The % figures given with respect to bubble thus relate to bubbles in the range 25µm and above.

The foam preferably has a density of between 0.7 and 2.5g/ml, preferably 0.9 to 0.19 g/ml, more preferably 1.1 to 1.6g/ml. The foam preferably has a half life of greater than 60 seconds, preferably 90 seconds, more preferably 120 seconds, e.g. more than 150 or more than 180 seconds. If a gas mixture having a high percentage, e.g. 50% or more, of carbon dioxide is used, it may be desirable to add a viscosity enhancing agent to the sclerosant and gas mix prior to foaming in order to increase the half life. Suitable viscosity enhancing agents include glycerol or PVP.

Further features and advantages of the invention will be apparent from the following description of a number of specific embodiments, which is given by way of example only and with reference to the following drawings.
Figure 1 is a schematic sectional plan view of a first embodiment of cartridge in accordance with the invention;
Figure 2 is a simple schematic plan view of the cartridge of Figure 1;
Figure 3 is a schematic view of the cartridge of Figures 1 and 2 in the direction A;
Figure 4 is a schematic view of the cartridge of Figures 1,2 and 3 in the direction B;
Figure 5 is a schematic representation of a pumping machine in accordance with the invention; and
Figure 6 is a schematic sectional plan view of a second embodiment of cartridge in accordance with the invention.

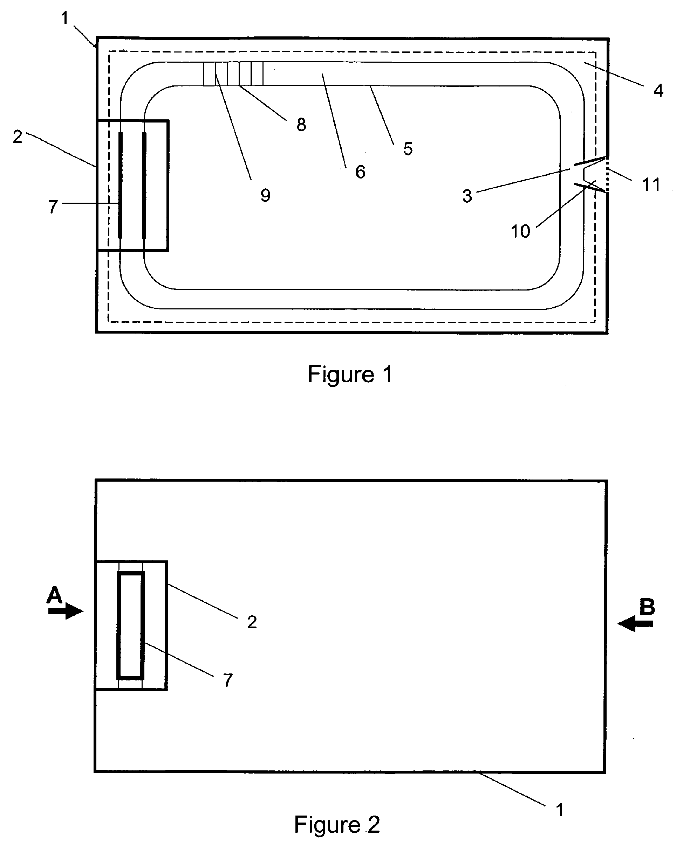

Referring firstly to Figures 1 to 4, a cartridge for the production of sclerosing foam suitable for use in the treatment of varicose veins comprises a housing 1 of polypropylene or other suitable plastics material having a flat profile, about 10cm in length, 7cm in width and 1cm in thickness. The top and edge walls are partly cut away on one side of the housing to provide a recess 2, whilst on the opposite side of the housing 1 a standard luer-type port 3 is provided, suitable for receiving a standard luer-type syringe nozzle in a sealing fashion.

Within the housing 1 is located a pouch 4 of metallised plastic laminate material, e.g. of aluminium and polyethylene, the outer extent of which is shown in Figure 1 as a dashed line. Such material is well known and is both gas-tight and relatively inexpensive. The pouch 4 comprises two sheets of laminate material joined together along seam lines 5, e.g. by ultrasound welding, to define a chamber 6 in the form of an endless loop. Welded into the outer of the two seams 5 is a polypropylene luer port unit 3. Fitted into the port 3 is a complementary stopper 10 which forms a substantially gas-tight seal with the port. The port 3 is further sealed with a gas-impermeable membrane 10 of the same metallised plastics laminate material secured to the outer edge of the port unit 3 with an adhesive of a type which allows the membrane 10 to be peeled off prior to use.

On the opposite side of the cartridge, over a portion 7 of the loop, the pouch material is reinforced on each side with an external layer of relatively thick (approximately 1mm) resilient material such as PVC or silicone rubber, which has been pre-formed with a semi-circular cross section. The result is that this portion of the loop behaves similarly to a piece of resilient tubing made from the PVC or silicone rubber material. The reinforced portion 7 of the loop coincides with the recess 2 in the housing and is therefore exposed, as can best be seen in Figure 2. An alternative construction is provided by locating a similar length of resilient (e.g. PVC or silicone) tubing inside the pouch in the same portion of the loop. Another alternative would be to provide the pouch with a cutaway portion approximately corresponding to the shape of the housing in the recess, such that the chamber 6 formed by the pouch is interrupted at the side edges of the cutaway portion, leaving opposed openings in the pouch into which the ends of a section of resilient tubing are bonded to complete the loop chamber 6.

Located within the loop chamber 6 is a foam generating structure 8 formed of a series of mesh elements 9. Each mesh element comprises a flat cylindrical member of plastics material, the internal diameter of which is spanned by a mesh material. Five of these mesh elements are arranged in a stack as shown in Figure 1. The mesh elements are known in themselves and are described e.g. in EP-A-1266682. This is a similar structure to that used in the canister product referred to above and described in e.g. EP-A-1180015. Alternative foam generating structures may be provided. It is believed that, due to the continuous circulating mode of operation of the device of the present invention, the exact properties of the foam generating element are not critical and that a baffle or series of baffles or a labyrinthine path or even a simple constriction or obstruction may be sufficient to produce a foam of the desired properties.

The loop chamber 6 is charged with 8ml of sclerosant liquid, e.g. a 1% aqueous solution of polidocanol. Other concentrations of polidocanol are possible, and other sclerosants will be known to those of ordinary skill in this field, e.g. sodium tetradecyl sulfate, ethanolamine oleate, sodium morrhuate, hypertonic glucosated or glucosaline solutions, chromated glycerol or iodated solutions.

The loop chamber 6 is also charged with 50ml of gas. The gas comprises a mixture of 70% oxygen and 30% carbon dioxide, with less than 0.5% nitrogen gas impurity. Other gas mixtures are possible, but this mixture is preferred for reasons which are set out in published patent applications EP-A-1180015 and PCT/GB04/004848.

The entire cartridge is sealed in a gas tight package of metallised plastic laminate material.

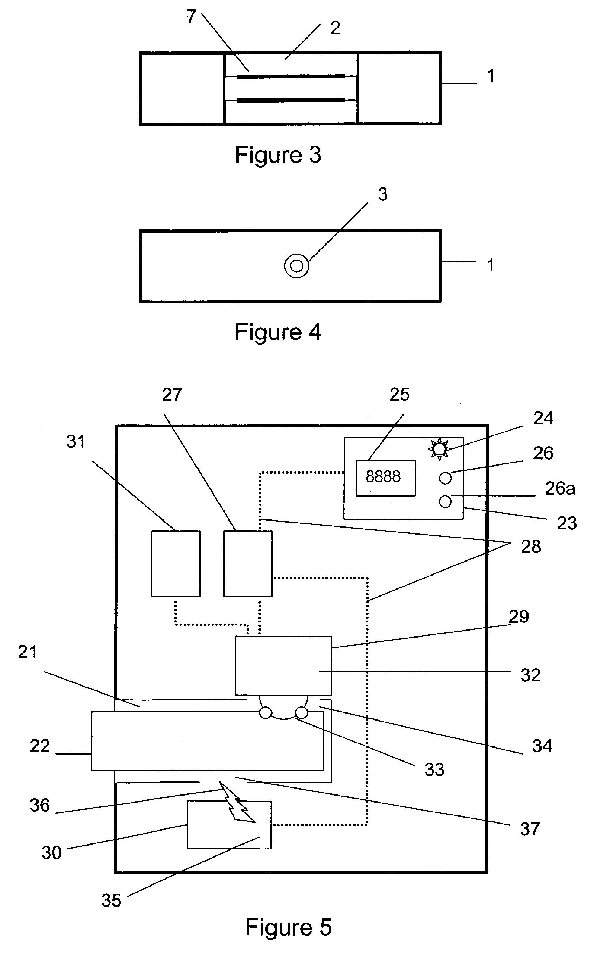

To produce foam, the cartridge described above is inserted into a pumping machine which propels the liquid and gas around the loop chamber 6 to create foam which may then be tapped off via the luer port 3. A pumping machine is illustrated schematically in Figure 5. The machine is a desk-top device comprising a main housing 20 in which is formed a slot 21 for receiving a cartridge 22 as described above. On the exterior of the casing 20 is a control panel 23 with a "foam ready" indicator light 24, a digital display 25 and an on/off switch 26.

Inside the casing is a microprocessor controller 27 connected by various signal lines 28 to a pump unit 29, to the control panel 23 and to a cartridge disabling device 30.

The pump unit 29 is connected to a power source 31 (which could be a battery or a transformer receiving power from a mains supply - not shown). The unit may be standard peristaltic pump of the type used in many medical applications including e.g. dialysis machines. As schematically illustrated in Figure 5, the pump comprises a motor 32 driving a roller unit 33 which projects through an aperture 34 in the casing into the cartridge slot 21. When a cartridge 22 is inserted in the slot 21 (as shown in Figure 5), the roller engages with the exposed resilient portion 7 of the loop chamber wall (see Figures 1 & 2).

The cartridge disabling device 30 comprises a solenoid actuator 35 and a blade 36 located adjacent a second aperture 37 in the casing within the slot 21.

In use, a cartridge 22 is inserted into the slot 21 in the machine immediately prior to the foam being required for treatment of a patient (or other use), with the sealed luer outlet 3 on the exposed side of the cartridge. The machine is then switched on and the pump unit engages with the exposed resilient portion 7 of the loop chamber wall through the recess 2 in the cartridge housing 1. The pump then proceeds to move the liquid and gas around the chamber in a peristaltic movement which is well known and understood in this field. As the fluid is moved around, it passes through and interacts with the foam generating meshes 8 and is mixed and then the mixture subjected to shear forces as it repeatedly passes through the meshes, which cause it to turn into a fine microfoam. A steady state is reached after about 30 seconds, where the properties of the foam remain essentially constant. Foam of this sort tends to decay relatively fast if left alone; this process is counteracted by the continuing circulation of the foam through the mesh stack 8.

The microprocessor control unit 27 causes the "foam ready" indicator light 24 to illuminate after a period sufficient to ensure that the foam has reached steady state, i.e. has substantially constant properties which can be known. This peiod of time could be e.g. 30 seconds or one minute. At this point, an operator may temporarily stop the machine using the "pause" button 26a, peel off the membrane seal 11 from the luer outlet 3, then remove the stopper 10 and insert a syringe having a standard luer nozzle and withdraw foam for use. Normally, about 15ml of foam might be withdrawn. This represents only some of the foam in the cartridge, which contains about 60ml. The stopper 10 may then be reinserted and the machine reactivated by pressing the "pause" button 26a again, to maintain the remaining foam in condition until a further aliquot is required. In a modification of the first embodiment, the controller 27 is programmed to re-start the machine automatically when a given time has elapsed after pressing the "pause" button 26a, e.g. 1 minute. Optionally, an audible alarm may sound 5 seconds before the machine re-starts.

In order to avoid prolonged use which may lead to compromised sterility, the controller 27 is programmed to stop the machine after 30 minutes. Remaining time is displayed on the display 25. Optionally, an audible alarm sounds 5 minutes before the machine stops. At the end of the operational period, the pump stops and the controller 27 causes the solenoid actuator 35 of the cartridge disabling device 30 to drive the blade 36 through the aperture 37 and into the cartridge. The controller then causes the solenoid actuator to retract the blade to allow the cartridge to be removed. The cartridge is thereby damaged and its further use is prevented. This is a safety feature which is intended to prevent reinsertion of a cartridge which has been used but still has fluid left in it. Reuse of a cartridge may compromise sterility.

In a modification of the first embodiment, the port 3 is provided with a septum in place of the stopper 10 and membrane 11. Access to the chamber 6 is then possible using a syringe fitted with a needle. The septum preferably has sufficient thickness (e.g. 3mm or more) that the insertion of the bevelled end of a needle will not cause leakage of gas into or out of the chamber 6 to the surroundings. In this event, there is of course no need for the port unit 3 to have a luer configuration. In another modification, the septum could be provided as a reinforced, resilient portion of the loop, with a similar construction to the portion 7. In a further modification, the luer port and peelable seal membrane are retained but a valve is provided in place of the stopper 10. The valve is arranged to open on insertion of the luer nozzle of a syringe, but otherwise to remain closed to prevent the transfer of gas or liquid between the chamber 6 and the surroundings. All of these modifications of the first embodiment have the advantage that the pump need not be stopped when a syringe nozzle or needle is inserted to withdraw foam. In these modifications, the pause button 26a may be omitted.

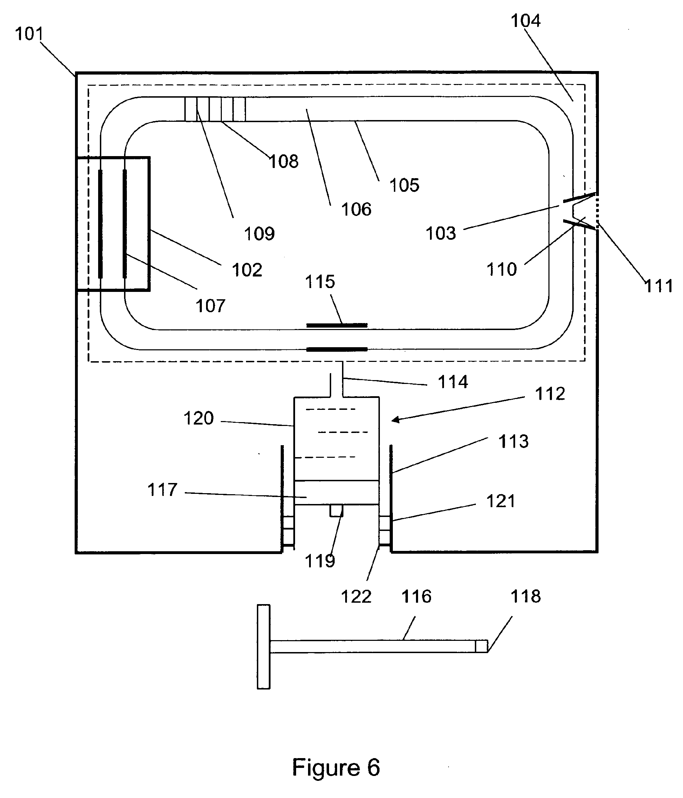

A second embodiment is shown in Figure 6. In most ways this embodiment is the same as the first and reference numerals correspond, but with the number series for the second embodiment commencing at 101 rather than 1. In the second embodiment the loop chamber 106 contains only gas in the cartridge as supplied. The cartridge housing 101 is somewhat larger and accommodates a syringe device 112 slidably mounted in a syringe recess 113 the housing 101. The syringe device comprises a glass container (or cartridge) 120 containing 8ml of 1% polidocanol solution, fitted with a movable sealing plunger element 117 and with a needle 114. Such containers are well known in themselves. The container is mounted in a ring 121 of resilient material which provides a degree of resistance to sliding. A flange 122 is provided at the proximal end of the cartridge. A second resilient portion of the chamber loop wall is provided in the second embodiment, to act as a septum 115.

As with the first embodiment, the cartridge is packed in a sterile metallised plastic laminate. In the case of the second embodiment, the pack also includes a syringe plunger shaft 116. The plunger shaft 116 is fitted with a snap lock formation 118 arranged to engage a complementary formation 119 on the plunger element in the container 120.

The second embodiment is obviously somewhat more complicated to use than the first. However, the more complex arrangement means that sterilisation of the polidocanol container and of other parts of the cartridge may be performed separately, which may be advantageous.

In use, the loop chamber 106 is charged with polidocanol solution from the container 120 prior to inserting the cartridge into the pumping machine. The operator fits the plunger shaft 116 onto the plunger element 117 using the co-operating snap lock formations 118 and 119. As the operator applies pressure to the plunger, the cartridge moves forward through the resilient ring 121 until the flange 122 at the proximal end of the container engages the ring and prevents further movement. At this position, the needle 114 has pierced the septum 115 and its tip is located within the chamber 6. As continued pressure is applied to the plunger 116, the plunger element 117 advances within the container to deliver the contents into the loop chamber 6. The resistance to relative movement between the cartridge and ring is arranged to be lower than the resistance to movement of the plunger element 117 within the container 120, so that the needle always penetrates the septum before delivery of the container contents.

Once the polidocanol has been delivered to the loop chamber 6, the plunger 116 is snapped off and the cartridge inserted into the pumping machine of Figure 5. The pumping machine is the same as for the first embodiment of cartridge, except that the dimensions of the slot 21 are adjusted to accommodate the larger cartridge.

Many modifications and alternatives will be apparent to the skilled reader. For example, it is not essential that the chamber 6 be in the form of a loop. Provided the pump is able to cause a circulating flow within the chamber which interacts with the foam generating structure, the same effect is achieved.

The pump need not necessarily be a peristaltic pump. It is possible that a magnetic pump member could be provided inside the chamber 6, which is driven by an external drive in the pumping machine in a similar way to a conventional laboratory magnetic stirrer. It is possible that the internal pump member could itself generate an adequate foam in which case the "foam generating structure" of such an embodiment could be constituted by the pump member.

In another modification, the flow direction of the pump may be periodically reversed to ensure that there are no "dead spots" in the chamber 6 where the flow is not sufficiently energetic, causing a build-up of foam which does not have the correct properties. In such an embodiment, the flow would still be a continuous, circulating flow, but the direction would be reversed e.g. every 2-10 seconds resulting in the fluid mix / foam passing through the foam generating means in a different direction.

## Claims

1. A foam generating device comprising:
a) a sealed or gas-tight chamber containing a foamable liquid and gas, preferably gas which is substantially completely dissolvable or absorbable in the human body, e.g. carbon dioxide or oxygen;
b) a foam generating structure located within the chamber;
c) a pump arranged to circulate the gas and liquid past the foam generating structure within the chamber;
d) whereby a foam of predetermined characteristics is generated within the chamber.

2. A device as claimed in claim 1 wherein the contents of the chamber are sterile and preferably also pyrogen free.

3. A device as claimed in claim 1 or claim 2 wherein the liquid is a sclerosing solution e.g. polidocanol solution.

4. A device as claimed in any preceding claim wherein the chamber is formed as an endless loop.

5. A device as claimed in any preceding claim wherein the chamber is provided with access means, preferably access means for a syringe luer nozzle or needle and taking the form of a septum, sealable port or valve.

6. A device as claimed in any preceding claim wherein the chamber is of variable volume.

7. A device as claimed in claim 6 wherein at least one wall of the chamber is of flexible or compressible material.

8. A device as claimed in claim 7 wherein the pump is external to the chamber and is arranged to engage the flexible or compressible material of the housing in order to circulate the gas and liquid within the chamber.

9. A device as claimed in any preceding claim wherein the foam generating structure comprises an element defining at least one passage of cross sectional area 1µ² to 10mm², preferably 10µ² to 5mm², more preferably 50µ² to 2mm² , through which gas and liquid pass when they are propelled around the loop.

10. A device as claimed in any of claims 1 to 8 wherein the maximum dimension of the said at least one passage is between 0.1µ and 2mm, preferably between 1µ and 1mm, more preferably between 2µ, and 500µ, still more preferably between 3µ an 100µ.

11. A device as claimed in any preceding claim wherein the said at least one passage is provided by at least one element comprising one or more meshes, screens or sinters.

12. A cartridge, unit or consumable for use in generating sclerosing foam, the cartridge, unit or consumable comprising a flexible-walled container containing a foam generating structure, the chamber being charged with gas, preferably gas which is substantially completely dissolvable or absorbable in the human body e.g. carbon dioxide or oxygen.

13. A cartridge, unit or consumable as claimed in claim 12 whose contents are sterile and preferably pyrogen free.

14. A cartridge, unit or consumable as claimed in claim 12 or claim 13 further containing a liquid, preferably a sclerosing solution e.g. polidocanol solution.

15. A cartridge, unit or consumable as claimed in any of claims 12 to 14 wherein the chamber is formed as an endless loop.

16. A cartridge, unit or consumable as claimed in any of claims 12 to 15 wherein the chamber is provided with access means in the form of a septum, sealable port or valve.

17. A cartridge, unit or consumable as claimed in any of claims 12 to 16 wherein the chamber is of variable volume.

18. A cartridge, unit or consumable as claimed in claim 17 wherein a wall of the chamber is of flexible material.

19. A method of generating sclerosing foam for use in the treatment of varicose veins, the method comprising circulating gas and sclerosant liquid continuously past or through a foam generating structure or device in a sealed container, so as to interact with the said structure or device.

20. A method as claimed in claim 19 wherein the gas and liquid are circulated until a steady state condition is attained in which the gas and liquid are in the form of a foam with predefined characteristics, e.g. bubble size range.

21. A method as claimed in claim 20 further comprising withdrawing, preferably with a syringe, a portion of the contents of the container after the steady state condition has been attained.
